# EUROPEAN PATENT APPLICATION

(11) **EP 2 088 757 A1**
(43) Date of publication of application: **12.08.2009**
(21) Application number: 08002460.7
(22) Date of filing: 11.02.2008
(51) Int. Cl.: H04M 3/523, H04L 29/06

(54) **Distribution of different media of a single session to different devices in a call centre environment**

(71) Applicant: Siemens Schweiz AG, 8047 Zürich (CH)
(72) Inventor: Baker, Shaun, 8044 Zuerich (CH); Kohler, Daniele, 8173 Neerach (CH)
(74) Representative: Kley, Hansjörg

(57) **Abstract**

For a Center Environment (4) a Media Splitting Function (RDSF) is provided allowing standard audio and video VoIP clients to communicate with infrastructures that require logically related yet distinct destination media streams, such as - but not limited to - a Remote Desk audio Call Centre with video overlay.

## Description

This invention relates to a method for a Media Splitting Function according to the preamble of claim 1 and a system for carrying out the method according to claim 7.

Standard VoIP Clients (e.g. audio and video capable SIP Clients) bundle the signalling and negotiation of their media streams within one logical session - also called one media session -, resulting in all media streams originating from the client being terminated at the same destination. Whilst adequate for peer to peer communications, there are many scenarios where such behaviour is inadequate: e.g. the video media stream bundled within the signalled session needs to be terminated at a different destination to the audio stream, because the video stream cannot traverse an audio-only PBX. Additionally, the destination of the video stream cannot be determined until the audio stream has been terminated, as network element intelligence is required to determine its destination.

Such a scenario occurs in a Remote Desk Communications environment, see EP 1 708 469 A1 [1], where the audio is ultimately routed (via a gateway) to any one of a number of possible ISDN call centre telephony endpoints, and - dependent on this destination - the destination for the associated video media stream must be calculated and ultimately routed to an adjacent but typically unrelated PC-based VoIP video soft client endpoint 3, see Figure.

There is no known exact solution for this problem. The role of a Splitting Function is functionally equivalent to that of a Back-to-Back User Agent B2BUA, typically found in any number of Session Border Controller implementations. Session Initiation Protocol SIP signalling B2BURs are defined in Section 6 of RFC 3261. Basically, a B2BUA terminates received signalling and often media streams on one interface, and opens corresponding new signalling and media streams to a single destination on another interface, acting as a proxy in between.

US 6,173,044 «Multipoint simultaneous voice and data services using a media splitter gateway architecture» [2] discloses a gateway description that is capable of separating a single-point voice and data stream into multipoint voice and data streams, routed over differing networks. This solution would not enable standards based VoIP clients to interface with neither the example Remote Desk Call Centre environment, nor with any general VoIP call environment where the media streams are terminated at differing endpoints.

All known existing B2BUA implementations maintain and carry over the association with one particular destination to the media streams they in turn open; the Remote Desk Splitting Function breaks this association to one destination, allowing standard audio and video VoIP clients to communicate in heterogeneous media environments, not necessarily confined to VoIP, where destinations for logically associated media are separated and may not be known in advance, but must be calculated for logically associated streams dependant on the successful termination of any one of the particular streams.

It is therefore the task of the present invention to provide a splitting function with a means for associating an audio client within a Call Centre to a Video Client of an agent in that Call Centre.

This task is solved by the features given in claim 1 regarding a method for the Media Splitting Function, together with the Media Splitting Function implemented in a call centre environment according to claim 7.

The Media Splitting Function - in the context of an important application also called «Remote Desk Splitting Function» RDSF - is a middle-ware server that solves this problem by allowing standard VoIP clients to terminate their logically associated audio and video streams at its one destination. Opening its own audio and video streams to the determined distinct destinations, it then relays the data between standard VoIP client streams and its own distinct destination streams.

In so doing it facilitates standard audio and video VoIP clients to communicate with infrastructures that require logically related yet distinct destination media streams, such as - but not limited to - a Remote Desk audio Call Centre with video overlay.

The solution with the Media Splitting Function RDSF brings an audio media stream to a distinct audio-only device (e.g. gateway) and an associated video media stream to another separate and distinct video-device (e.g. client). In this way, the value of Remote Desk is to bring video capability to existing audio only Call Centres.

Taking the Media Splitting Function, there are two examples of direct relevance: in the first, the Call Centre thus enabled is a legacy ISDN audio-only Call Centre; in the second, the Call Centre is a VoIP audio-only Call Centre.

Both examples share the common characteristics of the audio needing to be terminated at an audio-only (typically, hard-) phone, and the video needing to be terminated at a separate video-capable (typically, PC-based soft-) client. There is no inherent association between the audio and video endpoint devices. Rather the video destination has to be calculated at runtime based on the final destination of the audio stream.

Audio and video telephony is only one application of this invention: any combination of media streams can be split and bridged, and relayed to various devices by this method.

The Media Splitting Function RDSF is located within the call centre environment.

All third-party VoIP client calls from any terminal outside the call centre environment destined for a Remote Desk enabled Call Centre are terminated at the RDFS's external network interface by standard SIP routing. Thus the RDFS replies to the incoming SIP INVITE Request with 200 OK and an SDP description of the ports where it will terminate the audio and video streams of the call. Simultaneously, the RDFS will establish communication with the Call Centre on the third-party VoIP client's behalf.

The Media Splitting Function facilitates standard, third-party audio and video capable VoIP clients to communicate within Remote Desk enabled Call Centres without modification, using standards based SIP signalling, SDP media descriptions, and RTP streams.

Whilst foreseen as a direct solution to the Remote Desk VoIP video overlay to audio-only ISDN call centres, the media splitting capability of the Media splitting Function has wider application to any scenario where separate media destinations diverge from the intended standard single destination.

Additionally the media need not be limited to audio and video streams, but could include streams associated with text messaging, application sharing or file transfer, or any such combination, as is typical for standards-based VoIP clients.

Further advantageous embodiments of the present invention are given in dependent claims.

The invention will be now described in preferred embodiments with reference to the only one accompanying figure wherein:
the Media Splitting Function is in a call center
environment.

In the figure the call centre environment of a company is denoted by the reference numeral 4. The call centre environment 4 comprises a Private Branch Exchange (PBX) and an associated Call centre server CC-S, which determines free agents to whom the incoming call can be routed, this is also called routing information. The agents of the Call Centre use typically a personal computer 2 on which at least a video client is running and an associated hard-phone 1. This hard-phone 1 is e.g. a normal TDM- or ISDN-hard-phone connected to the exchange PBX or an IP-Phone also connected to an IP-exchange PBX. In the latter case an Audio Client is running on that hard-phone. From outside the call centre environment 4 any VoIP-Client may be connected. These clients of any type and implementation are running on any type of a home based terminal 3, typically a personal computer 3.

If there is an IP-Exchange PBX the Remote Desk Controller RDC can directly be connected with the IP-Exchange PBX. For a TDM-/ISDN-Exchange PBX a gateway is connected in between.

The Media Splitting Function RDSF splits the incoming audio and video stream.

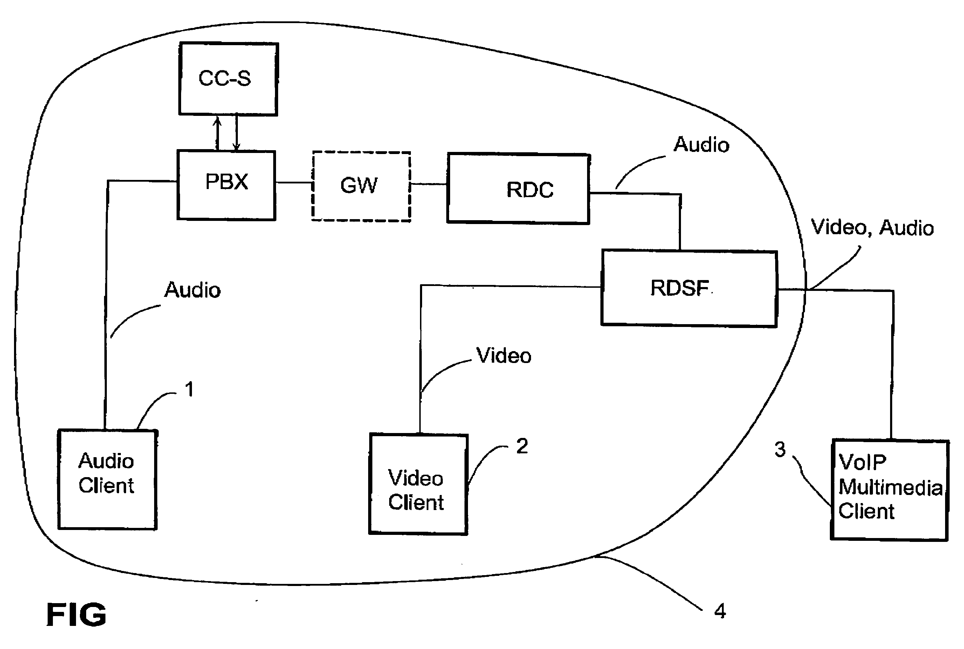

In the case of the Remote Desk enabled ISDN Call Centre, the RDSF will send a SIP INVITE for an audio-only media description to the Remote Desk Controller server RDC, responsible for interfacing to the ISDN gateway. On 200 OK and a corresponding media description for the gateway audio stream, it will proxy audio data between gateway and third-party VoIP client. The RDSF will then process the ISDN audio destination information communicated by the RDC via SIP INFO messages to determine (via a mapping function) the destination for the video stream. Once determined, the RDSF will issue a SIP INVITE for a video-only stream to the mapped destination PC video client, and - once again - upon 200 OK and a corresponding video media description, will proxy video data between PC client and third-party VoIP client. This example with media stream destinations can be seen in Diagram 1 of Section 5 of this document.

In the case of the Remote Desk enabled VoIP Call Centre the RDSF communicates via SIP directly (or via an IP-PBX) with the audio endpoint, and determines the destination of the associated video stream without help from the RDC, but otherwise is functionally equivalent. As explained before, there is in this case no need for a gateway.

In both examples, the third-party Multimedia Client is able to communicate in a Remote Desk enabled Call Centre environment 4 without modification and blissfully unaware that its co-destined media streams are in fact being relayed to different locations.

In particular the splitting may be realized according to the following example of an incoming Session Description Protocol SDP description for a media session offering an audio and a video stream:
v=0
o=ETA 71351324 0 IN IP4 <remote client>
S=ScS Client
c=IN IP4 <remote client>
t=0 0
m=audio 4510 RTP/AVP 0 8 4
a=rtpmap:0 PCMU/8000
a=rtpmap:8 PCMA/8000
a=rtpmap:4 G723/8000
a=ptime:30
m=video 4512 RTP/AVP 34
a=rtpmap:34 H263/90000

In this case, the 'm' lines indicate that the media session comprises both audio and video streams. The server implementing the Media Splitting function would therefore construct two separate SDP descriptions sent on its Remote Desk server side interface as follows:

SDP for audio only sent to RDC:
v=0
o=ETA 71351324 0 IN IP4 <server side interface of RDSF>
s=RDSF
c=IN IP4 <server side interface of RDSF>
t=0 0
m=audio 4510 RTP/AVP 0 8 4
a=rtpmap:0 PCMU/8000
a=rtpmap:8 PCMA/8000
a=rtpmap:4 G723/8000
a=ptime:30

SDP for video only sent direct to Remote Desk Agent video client:
v=0
o=ETA 71351324 0 IN IP4 <server side interface of RDSF>
s=RDSF
c=IN IP4 <server side interface of RDSF>
t=0 0
m=video 4512 RTP/AVP 34
a=rtpmap:34 H263/90000

Once the new streams are created, the RDSF copies the audio and video data contained in the RTP packet payloads between the corresponding streams.

**List of used symbols, abbreviations and acronyms**

| | |
|---|---|
| B2BUA | Back-to-Back User Agents |
| CC-S | Call Center Server |
| ENUM | Telephone Number Mapping, IETF RFC 3761 |
| ETSI | European Technical Standardization Institute |
| GSM | Global System for Mobile Communication |
| GW | Gateway |
| H.248 | MEGACO (Media Gateway Control Protocol), ITU-T/IETF |
| IETF | Internet Engineering Task Force |
| ISDN | Integrated Services Digital Network |
| ITU-T | International Telecommunication Union |
| PBX | Private Branch Exchange |
| PSTN | Public Switched Telephone Network |
| RDSF | Media Splitting Function, Remote Desk Splitting Function |
| RTP | Real Time Transport Protocol, IETF RFC 1889 |
| SDP | Session Description Protocol |
| SIP | Session Initiation Protocol, IETF RFC 3261 |
| TDM | Time Divison Multiplex |
| VoIP | Voice over Internet Protocol |
| 1 | Hardphone of an agent |
| 2 | Computer of an agent |
| 3 | Home based terminal |
| 4 | Call Center environment of company |

### References

[1] EP 1 708 469 A1 «Method and system for connecting a multimedia terminal to a call centre» Siemens Schweiz AG, CH - 8047 Zürich.
[2] US 6,173,044 B1 «Multipoint simultaneous voice and data services using a media splitter gateway architecture» Inventors: Hortensis et al. Assignee: International Business Machines Corporation, Armonk, NY (US).

## Claims

1. Method for a Media Splitting Function (RDSF) in a call center environment (4), where
- a media session comprising signaling data and media streams is established,
- the media session contains at least two distinct media streams, in the following context called 1^{st} and 2^{nd} media stream,
- the Media Splitting Function (RDSF) is associated to the call center environment (4),
- the call center environment (4) comprising a plurality of computers (2) and associated hardphones (1) each used by an agent;
**characterised in by the steps**
(A) the media session is routed to the Media Splitting Function (RDSF) and the at least two media streams are split where;
(A1) one media stream is bridged to a private branch exchange (PBX);
(A2) the other stream is bridged to a client (2) and played locally at that client (2);
(B) the media session is terminated at the Media Splitting Function (RDSF).

2. Method according to claim 1;
**characterised in that**
the media stream which is played locally at said client is a video stream.

3. Method according to claim 1 or 2;
**characterised in that**
the media stream which is bridged to the private branch exchange (PBX) is an audio stream.

4. Method according to one of the claims 1 to 3;
**characterised in that**
in step (A) the splitting of the at least two media streams is done by indications in a SDP-Protocol.

5. Method according to claim 4;
**characterised in that**
in the SDP-Protocol there is a field indicating the type of a media stream.

6. Method according to anyone of the claims 1 to 5;
**characterised in that**
the other stream being bridged to an private branch exchange (PBX) is further switched to an hardphone (1) according to the routing information given by an Call Center Server (CC-S).

7. Media Splitting Function (RDSF) for a call center environment (4), where
- a media session comprising signaling data and media streams is established,
- the media session contains at least two distinct media streams, in the following context called 1^{st} and 2^{nd} media stream,
- the Media Splitting Function (RDSF) is associated to the call center environment (4),
- the call center environment (4) comprises a plurality of computers (2) and associated hardphones (1) each used by an agent;
**characterised in by**
(A) the media session is routed to the Media Splitting Function (RDSF) and at least two media streams are split
where;
(A1) one media stream is bridged to an private branch exchange (PBX);
(A2) the other stream is bridged to an client (2) and played locally at that client (2);
(B) the media session is terminated at the Media Splitting Function (RDSF).

8. Media Splitting Function (RDSF) according to claim 7;
**characterised in that**
the splitting of the at least two media streams is done by indications in a SDP-Protocol.

9. Media Splitting Function (RDSF) according to claim 8;
**characterised in that**
in the SDP-Protocol there is a field indicating the type of a media stream.
